# EUROPÄISCHE PATENTSCHRIFT

(11) **EP 3 999 457 B1**
(45) Veröffentlichungstag und Bekanntmachung des Hinweises auf die Patenterteilung: **20.11.2024**
(21) Anmeldenummer: 20767510.9
(22) Anmeldetag: 02.09.2020
(51) Int. Cl.: B65G 47/52

(54) **ABGABE VON HERGESTELLTEN TRINKHALMEN**
DISPENSING PRODUCED DRINKING STRAWS
DISTRIBUTION DE PAILLES À BOIRE FABRIQUÉES

(30) Priorität: 03.09.2019 DE 102019123541
(43) Veröffentlichungstag der Anmeldung: 25.05.2022
(73) Patentinhaber: Körber Technologies GmbH, 21033 Hamburg (DE)
(72) Erfinder: HARTMANN, Franz, 21502 Geesthacht (DE); PEHMÖLLER, Jürgen, 21031 Hamburg (DE); TEICHMANN, Hubert, 21031 Hamburg (DE)
(74) Vertreter: Seemann & Partner Patentanwälte mbB
(86) Internationale Anmeldenummer: PCT/EP2020/074401
(87) Internationale Veröffentlichungsnummer: WO 2021/043790

(56) Entgegenhaltungen:
- DE-A1- 2 641 934
- GB-A- 1 584 565
- US-A- 3 203 325

## Beschreibung

Die Erfindung betrifft eine Vorrichtung zur Überführung von längsaxial geförderten Trinkhalmen in eine queraxiale Förderrichtung. Die Erfindung betrifft ferner ein Verfahren zum Überführen von längsaxial geförderten Trinkhalmen in eine queraxiale Förderrichtung, wobei die Trinkhalme zunächst in einer Richtung längs einer Längsachse der Trinkhalme gefördert werden.

Schließlich betrifft die Erfindung eine Verwendung eines Druckluftstoßes bei der Herstellung von Trinkhalmen.

Zur Herstellung von Strohhalmen bzw. Trinkhalmen wird bei einem Kunststofftrinkhalm über eine geschlossene Form Kunststoff extrudiert. Ursprünglich wurden Trinkhalme auch aus Papierröhrchen hergestellt, bei denen Papierstreifen spiralförmig über ein Rohr gewickelt, geklebt und mit einer Paraffinschicht überzogen wurden. Der erste künstlich hergestellte Strohhalm bzw. Trinkhalm war aus Papier (siehe hierzu http:// www.cusmiq.de/qa/show/851342/wie-werden-trinkhalme-hergestellt/). Hierzu sei zudem auf die US 3 203 325 A und die GB 787 981 A verwiesen. Die wickelnde Fertigung von Trinkhalmen aus Papier stellt ein vergleichsweise langsames Herstellungsverfahren dar.

In der Zigarettenfilterherstellung ist es bekannt, Hohlrohre aus wenigstens zweilagigem Papier in einer Formatvorrichtung bei der längsaxialen Förderung des Papiers herzustellen. Hierzu sei auf die DE 10 2017 114 910 A1 sowie DE 10 2014 226 019 A1 und DE 10 2016 124 051 A1 der Anmelderin verwiesen. Hierdurch können sehr effizient Hohlrohre aus doppellagigen Materialstreifenabschnitten hergestellt werden.

In DE 26 41 934 A1 ist ein Gerät zur Aufnahme sich axial bewegender stabförmiger Gegenstände offenbart, gekennzeichnet durch Mittel, welche die Axialbewegung aufeinanderfolgender, führender Gegenstände verlangsamen, und Mittel, welche die stabförmigen Gegenstände in einem Strom wegbefördern, der aus einem Stapel dieser Gegenstände besteht und sich quer zu deren Längsrichtung bewegt.

Offenbart in GB 1 584 565 A ist eine Vorrichtung zur Überführung von längsaxial geförderten Zigaretten in eine queraxiale Förderrichtung, mit einer Förderstrecke, in der die längsaxial geförderten Zigaretten längsaxial gefördert werden, und einer Druckluftstoßeinrichtung, die ausgebildet ist, einen Druckluftstoß quer in die Förderstrecke abzugeben. Die Druckluftstoßeinrichtung besteht aus einer mit einer Druckluftquelle verbundenen Blasrampe, die eine Vielzahl von Blaslöchern aufweist.

Außerdem ist aus der nicht veröffentlichten deutschen Patentanmeldung 10 2019 112 261.9 der Anmelderin mit Anmeldetag vom 10.05.2019 bekannt, wie Trinkhalme aus Papier effizient herstellbar sind. Zudem sind entsprechende Trinkhalme bekannt und auch eine Vorrichtung zur Herstellung von solchen Trinkhalmen. Das Verfahren zum Herstellen von Trinkhalmen aus Papier gemäß der deutschen Patentanmeldung 10 2019 112 261.9 sieht die folgenden Verfahrensschritte vor:
- Fördern eines ersten Materialstreifens in längsaxialer Förderrichtung, wobei der erste Materialstreifen eine erste Breite aufweist,
- Fördern eines zweiten Materialstreifens in längsaxialer Förderrichtung, wobei der zweite Materialstreifen eine zweite Breite aufweist,
- Beleimen des ersten Materialstreifens und/oder des zweiten Materialstreifens mit einem ersten Klebstoff, der wasserfest oder wenigstens zeitweise beständig gegen Wasser ist, wobei zumindest ein längsaxialer Randbereich des zweiten Materialstreifens mit dem ersten Klebstoff oder einem zweiten Klebstoff beleimt wird,
- Versetztes Zusammenführen des ersten Materialstreifens und des zweiten Materialstreifens beim längsaxialen Fördern, so dass der erste und der zweite Materialstreifen übereinandergelegt werden,
- Formen der übereinander gelegten Materialstreifen in einen rohrförmigen Strang, wobei der erste Materialstreifen innen liegt und die längsaxialen Kanten des ersten Materialstreifens auf Stoß liegen, und
- Ablängen des Strangs in doppellagige Trinkhalme.

Zudem ist eine Vorrichtung zur Herstellung von Trinkhalmen bekannt, wobei die Vorrichtung die folgenden Merkmale umfasst:
- eine erste Materialstreifenzuführvorrichtung zum Fördern eines ersten Materialstreifens,
- eine zweite Materialstreifenzuführvorrichtung zum Fördern eines zweiten Materialstreifens,
- eine Beleimvorrichtung, mittels der der erste Materialstreifen und/oder der zweite Materialstreifen mit Klebstoff benetzbar sind,
- eine Zusammenführvorrichtung, mittels der der erste Materialstreifen und der zweite Materialstreifen zum Verkleben so zusammenführbar sind, dass der erste Materialstreifen und der zweite Materialstreifen versetzt zueinander übereinanderliegen,
- eine Formatvorrichtung, in der aus den zusammengeführten ersten und zweiten Materialstreifen ein rohrförmiger Strang herstellbar ist und
- eine Schneidvorrichtung zum Ablängen des rohrförmigen Strangs in eine Vielzahl von Trinkhalmen aus Papier.

Aus CN 204210820 U ist eine Fördervorrichtung für Trinkhalme bekannt, bei der hergestellte Trinkhalme in eine Tasche hineingeschoben werden.

Derzeitige Vorrichtungen, mittels denen Trinkhalme weitergefördert und konfektioniert werden, führen insbesondere bei empfindlichen Trinkhalmen unter Umständen zu Beschädigungen und damit Ausschuss.

Es ist Aufgabe der vorliegenden Erfindung, eine Vorrichtung und ein Verfahren sowie eine Verwendung anzugeben, mittels derer es möglich ist, effizient und sehr schonend Trinkhalme aus einer Bewegungsrichtung in eine andere Bewegungsrichtung zu überführen.

Gelöst wird diese Aufgabe durch eine Vorrichtung zur Überführung von längsaxial geförderten Trinkhalmen in eine queraxiale Förderrichtung, die dadurch weitergebildet ist, dass eine Förderstrecke vorgesehen ist, in der die längsaxial geförderten Trinkhalme längsaxial förderbar oder gefördert sind, wobei außerdem eine Druckluftstoßeinrichtung vorgesehen ist, die ausgebildet ist, einen Druckluftstoß quer in die Förderstrecke abzugeben, wobei die Druckluftstoßeinrichtung zwei räumlich getrennte Druckluftausgänge aufweist, wobei der Abstand der Druckluftausgänge zueinander einstellbar ist.

Hierdurch wird ein Druckluftstrom auf einen längsaxial geförderten Trinkhalm in einer Richtung quer zur längsaxialen Förderrichtung des Trinkhalms abgegeben und der Trinkhalm wird in eine queraxiale Förderung überführt. Durch Verwendung einer Druckluftstoßeinrichtung ist eine sehr schonende und effiziente Übergabe der Trinkhalme von einer längsaxialen Förderrichtung in eine queraxiale Förderrichtung möglich.

Vorzugsweise ist die Förderstrecke auf einer zur Führung der Trinkhalme vorgesehenen Fördervorrichtung, beispielsweise einer Prismenschiene, vorgesehen.

Die Druckluftstoßeinrichtung kann eine Düse oder bevorzugt zwei oder mehr Düsen aufweisen, die in längsaxialer Förderrichtung der Trinkhalme bzw. in der Förderstrecke in längsaxialer Förderrichtung hintereinander angeordnet sind.

Erfindungsgemäß weist die Druckluftstoßeinrichtung zwei räumlich getrennte Druckluftausgänge auf. Es können auch mehr als zwei räumlich getrennte Druckluftausgänge vorgesehen sein. Die Druckluftstoßeinrichtung ist damit derart ausgebildet, zwei oder mehr räumlich getrennte Druckluftstöße auf den längsaxial geförderten Trinkhalm abzugeben.

Erfindungsgemäß ist der Abstand der Druckluftausgänge zueinander einstellbar. Beispielsweise kann die Druckluftstoßeinrichtung aus zwei Vorrichtungen mit jeweils einem Druckluftausgang wie beispielsweise zwei Düsen, ausgebildet sein, deren Abstand zueinander vorzugsweise einstellbar ist. Die Düsen können beispielsweise auf einer Einstellschiene verschiebbar ausgebildet sein. Vorzugsweise wird der Abstand der Druckluftausgänge in Abhängigkeit der Länge der hergestellten Trinkhalme eingestellt. Dies kann auch automatisch geschehen.

Vorzugsweise ist der Abstand der Druckluftausgänge zu den längsaxial geförderten Trinkhalmen einstellbar. Der Abstand ist vorzugsweise größer oder gleich 2 mm, insbesondere vorzugsweise größer oder gleich 3 mm, insbesondere vorzugsweise größer oder gleich 4 mm, insbesondere vorzugsweise größer oder gleich 5 mm, insbesondere vorzugsweise größer oder gleich 6 mm, insbesondere vorzugsweise größer oder gleich 7 mm, insbesondere vorzugsweise größer oder gleich 8 mm, insbesondere vorzugsweise größer oder gleich 9 mm, insbesondere vorzugsweise größer oder gleich 10 mm. Vorzugsweise ist der Abstand maximal 10 mm, insbesondere vorzugsweise maximal 20 mm, insbesondere vorzugsweise maximal 30 mm, insbesondere vorzugsweise maximal 40 mm oder insbesondere vorzugsweise maximal 50 mm.

Vorzugsweise ist die zeitliche Länge des Druckluftstoßes einstellbar. So kann beispielsweise effizient auf das Gewicht eines Trinkhalmes reagiert werden. Bei einem geringeren Gewicht kann eine kürzere Länge des Druckluftstoßes eingestellt sein und bei einem größeren Gewicht eine größere Länge des Druckluftstoßes eingestellt werden. Für den Fall, dass mehr als ein Druckluftausgang vorgesehen ist, ist vorzugsweise vorgesehen, dass der Druckluftstoß des jeweiligen Druckluftausganges gleichzeitig erfolgt, um so eine möglichst gleichmäßige queraxiale, insbesondere eine senkrecht zur längsaxialen Richtung erzielte, Förderung des Trinkhalmes zu ermöglichen. Der aus den Druckluftausgängen jeweils abgebbare Druckluftstoß kann auch etwas zeitlich versetzt zueinander ausgeführt werden, um eine Vergleichmäßigung eines anschließenden Massenstroms zu ermöglichen.

Vorzugsweise ist der Druckluftstoß zeitlich getaktet, wobei insbesondere der Takt über eine einen längsaxial geförderten Strang in Trinkhalme ablängende Ablängvorrichtung vorgebbar ist. Hierbei wird in Abhängigkeit von dem Schnitt durch den Strang, aus dem dann die Trinkhalme hergestellt werden, und in Abhängigkeit der längsaxialen Fördergeschwindigkeit der Takt der Druckluftstoßeinrichtung eingestellt bzw. gesteuert.

Vorzugsweise weisen die Druckluftstöße eine im Wesentlichen horizontale Ausrichtung auf.

Vorzugsweise ist in Richtung des Druckluftstoßes eine Bewegungshemmvorrichtung vorgesehen, die eine horizontale Querbewegung der Trinkhalme begrenzt.

Die Bewegungshemmvorrichtung kann als eine Aufprallvorrichtung oder auch als eine Bewegungsbegrenzungsvorrichtung bezeichnet werden. Vorzugsweise hat die Bewegungshemmvorrichtung Luftöffnungen, um so eine effiziente Abgabe der Druckluft ohne wesentliche Verwirbelungen zu ermöglichen.

Vorzugsweise weist die Bewegungshemmvorrichtung zwei oder mehr Teile auf, die in längsaxialer Förderrichtung der Trinkhalme hintereinander angeordnet sind und im Wesentlichen parallel zu der längsaxialen Förderrichtung mit einem, vorzugsweise einstellbaren, Abstand zu der Förderstrecke, insbesondere längsaxialen Förderstrecke, der Trinkhalme angeordnet ist. Die Bewegungshemmvorrichtung ist vorzugsweise gegenüberliegend der Druckluftstoßvorrichtung.

Vorzugsweise umfasst die Bewegungshemmvorrichtung wenigstens einen Kettenvorhang. Ein Kettenvorhang lässt besonders gut die Druckluft durch und bremst die horizontale Quer- und auch Längsbewegung der Trinkhalme ohne Beschädigung der Trinkhalme sehr gut ab.

Vorzugsweise ist unterhalb der Druckluftstoßeinrichtung ein Förderelement, insbesondere ein Förderband, zum queraxialen Abfördern von Trinkhalmen vorgesehen. Insbesondere ist das Förderelement unterhalb der Bewegungshemmvorrichtung vorgesehen. Ferner vorzugsweise liegt ein Teil der Bewegungshemmvorrichtung teilweise auf den auf dem Förderband queraxial abgeförderten Trinkhalmen auf, um so eine Beruhigung der Förderung der Trinkhalme zu ermöglichen. Vorzugsweise ist eine einlagige Förderung auf dem Förderband vorgesehen und insbesondere eine Übergabe in einen mehrlagigen Massenstrom, der auch queraxial gefördert wird.

Ferner vorzugsweise liegt zwischen der Druckluftstoßeinrichtung und dem Förderband ein, insbesondere schräg angestelltes, Förderelement, beispielsweise ein Blech. Hierdurch werden die durch die Bewegungshemmvorrichtung abgebremsten Trinkhalme, die anschließend herunterfallen, effizient zum Förderband geleitet. Vorzugsweise ist die Bewegungshemmvorrichtung in einen oberen Teil und einen unteren Teil aufgeteilt, wobei insbesondere der obere Teil schräg abwärts zum Förderband gerichtet ist und insbesondere der untere Teil im Wesentlichen parallel zum Förderband angeordnet ist.

Vorzugsweise ist der Druckluftstoßimpuls größer als der Impuls der Trinkhalme in längsaxialer Förderrichtung.

Ferner ist vorzugsweise ein Sensor vorgesehen, der die Anzahl der Trinkhalme zählt.

In einer bevorzugten Ausgestaltung der vorliegenden Erfindung ist eine Abdeckvorrichtung vorgesehen, mittels der insbesondere eine Schalldämmung möglich ist. Die Abdeckvorrichtung umschließt vorzugsweise die Druckluftstoßeinrichtung, die Bewegungshemmvorrichtung und zumindest einen Teil der längsaxialen Förderstrecke.

Vorzugsweise ist ferner eine Vorrichtung zur Herstellung von Trinkhalmen mit einer erfindungsgemäßen Vorrichtung zur Überführung von längsaxial geförderten Trinkhalmen in eine queraxiale Förderrichtung vorgesehen.

Die Aufgabe wird ferner gelöst durch ein Verfahren zum Überführen von längsaxial geförderten Trinkhalmen in eine queraxiale Förderrichtung, wobei die Trinkhalme zunächst in eine Richtung einer Längsachse der Trinkhalme gefördert werden, das dadurch weitergebildet ist, dass die Trinkhalme mittels eines Druckluftstoßes eine Queraxialbewegungskomponente erhalten, wobei der Druckluftstoß mittels einer Druckluftstoßvorrichtung abgegeben wird, wobei die Druckluftstoßeinrichtung zwei räumlich getrennte Druckluftausgänge aufweist, wobei der Abstand der Druckluftausgänge zueinander einstellbar ist.

Vorzugsweise werden zwei oder mehrere parallele Druckluftstöße verwendet, um eine queraxiale Bewegungskomponente auf die Trinkhalme abzugeben.

Vorzugsweise ist der Druckluftstoß bzw. sind die Druckluftstöße ein im Wesentlichen horizontaler Druckluftstoß bzw. Druckluftstöße.

Es ist ferner bevorzugt, dass die Trinkhalme nach Beaufschlagen mit dem Druckluftstoß von einer Bewegungshemmvorrichtung in der horizontalen Bewegungsrichtung abgebremst werden. Nach Beaufschlagung mit dem Druckluftstoß werden die Trinkhalme dann auf ein Förderelement überführt, das die Trinkhalme queraxial fördert.

Wenn der Impuls der Trinkhalme in längsaxialer Förderrichtung beim längsaxialen Fördern kleiner ist als der durch den Druckluftstoß erzeugte Impuls in queraxialer Förderrichtung, ist eine besonders effiziente Übergabe von einer längsaxialen an eine queraxiale Bewegung der Trinkhalme möglich. Insbesondere ist der auf den Trinkhalmen wirkende queraxiale Druckluftstoß so, dass der queraxiale Impuls mehr als zweimal, insbesondere mehr als dreimal, insbesondere mehr als viermal, insbesondere mehr als fünfmal, insbesondere mehr als sechsmal, insbesondere mehr als siebenmal, insbesondere mehr als achtmal, insbesondere mehr als neunmal, insbesondere mehr als zehnmal so groß wie der Impuls in längsaxialer Förderrichtung.

Der erzeugte Impuls in queraxialer Förderrichtung ist vorzugsweise höchstens zwanzigmal, insbesondere vorzugsweise höchstens dreißigmal, insbesondere vorzugsweise höchstens vierzigmal, insbesondere vorzugsweise höchstens fünfzigmal so groß wie der Impuls in längsaxialer Förderrichtung.

Vorzugsweise ist die zeitliche Länge des Druckluftstoßes einstellbar. Hierdurch kann sehr einfach und effektiv der abgegebene Impuls auf den Trinkhalm eingestellt werden.

Vorzugsweise ist der Zeitpunkt des Druckluftstoßes einstellbar, wobei insbesondere ein zeitlicher Takt den Zeitpunkt definiert, der in Abhängigkeit eines Taktes einer einen längsaxial geförderten Strang in Trinkhalme ablängenden Ablängvorrichtung ist.

Die Aufgabe wird ferner durch die Verwendung eines Druckluftstoßes zum Überführen eines Trinkhalms bei der Herstellung des Trinkhalms von einer längsaxialen Förderrichtung in eine queraxiale Förderrichtung gelöst, wobei der Druckluftstoß mittels einer Druckluftstoßvorrichtung abgegeben wird, wobei die Druckluftstoßeinrichtung zwei räumlich getrennte Druckluftausgänge aufweist, wobei der Abstand der Druckluftausgänge zueinander einstellbar ist. Es werden zwei, insbesondere gleichzeitige, Druckluftstöße oder mehr als zwei, insbesondere gleichzeitige, Druckluftstöße zum Überführen eines Trinkhalms bei der Herstellung des Trinkhalms von einer längsaxialen Förderrichtung in eine queraxiale Förderrichtung verwendet.

Vorzugsweise ist eine Bewegungshemmvorrichtung vorgesehen, die eine horizontale Bewegung des durch den Druckluftstoß beaufschlagten Trinkhalms hemmt und beendet.

Vorzugsweise fällt anschließend der Trinkhalm auf ein Förderelement und wird auf dem Förderelement in einem Massenstrom queraxial gefördert. Alternativ können die Trinkhalme direkt in ein Behältnis queraxial abgegeben werden.

Durch die erfindungsgemäße Verwendung ist ein gleichmäßiger Massenstrom von queraxial geförderten Trinkhalmen möglich. Insbesondere ist ein deutlich geringerer apparativer Aufwand als mit Vorrichtungen gemäß dem Stand der Technik vorgesehen. Insbesondere hängt der Zeitpunkt des Druckstoßes von der Geschwindigkeit des Trinkhalms und der Lage bzw. dem Zeitpunkt des Schnitts durch den Strang zur Herstellung des Trinkhalmes ab.

Vorzugsweise ist ferner eine Absaugung vorgesehen, um die durch die Druckluftstöße hervorgerufenen Luftströme zu vergleichmäßigen, um so eine möglichst homogene und gleichmäßige Überführung der Trinkhalme in einen queraxial geförderten Massenstrom vorzusehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Ansicht einer erfindungsgemäßen Überführungsvorrichtung,
- Fig. 2: eine schematische Draufsicht auf die Überführungsvorrichtung aus Fig. 1 und
- Fig. 3: eine schematische Seitenansicht aus einer Richtung entgegen einer längsaxialen Förderung von Trinkhalmen.

Im Rahmen der Erfindung sind Merkmale, die mit "insbesondere" oder "vorzugsweise" gekennzeichnet sind, als fakultative Merkmale zu verstehen.

In den Zeichnungen sind jeweils gleiche oder gleichartige Elemente und/oder Teile mit denselben Bezugsziffern versehen, so dass von einer erneuten Vorstellung jeweils abgesehen wird.

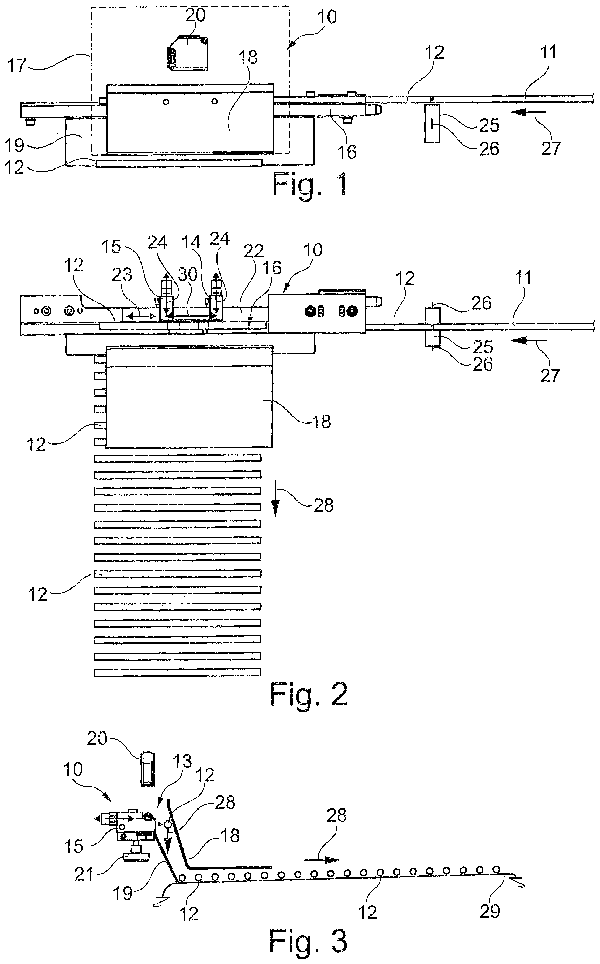

Fig. 1 zeigt schematisch eine erfindungsgemäße Überführungsvorrichtung 10 zur Überführung von Trinkhalmen 12, die in einer längsaxialen Förderrichtung 27 gefördert werden und in eine queraxiale Förderrichtung 28 überführt werden.

Zunächst wird in einer Vorrichtung zur Herstellung von Trinkhalmen, wie sie beispielsweise in der DE 10 2019 112 261.9 beschrieben ist, ein Strang hergestellt, der in längsaxialer Förderrichtung 27 gefördert wird. Die längsaxiale Förderrichtung 27 ist entlang der Längsachse des Strangs 11. Aus dem Strang 11 werden Trinkhalme 12 mittels einer Ablängvorrichtung 25 abgelängt. Die Ablängvorrichtung 25 kann ein Drehmesser mit Schneiden 26 sein. Die abgelängten Trinkhalme 12 gelangen in längsaxialer Förderrichtung 27 auf eine Führungsschiene 16, die Teil der Überführungsvorrichtung 10 sein kann. Die in Fig. 1 dargestellte Überführungsvorrichtung 10 weist eine Abdeckung 17 auf, die insbesondere zur Schalldämmung dienen kann oder aufgrund von sicherheitsrelevanten Aspekten vorgesehen sein kann. Es ist zudem ein Blech 19 in Fig. 1 dargestellt, das eine Seite eines abführenden Kanals definiert. Zudem ist ein Sensor 20 vorgesehen, der die Anzahl der abgeförderten Trinkhalme 12 zählt.

In den Fig. 2 und 3 ist schematisch die Funktionsweise der erfindungsgemäßen Vorrichtung deutlicher dargestellt. Auf der Führungsschiene 16 wird längsaxial ein Trinkhalm 12 gefördert. Wenn der Trinkhalm 12 in der in Fig. 2 dargestellten Position in der Führungsschiene 16 ist, werden zwei Druckluftstöße durch die Düsen 14, 15 in queraxialer Förderrichtung 28 auf den Trinkhalm 12 abgegeben, so dass der Trinkhalm 12 sich in Förderrichtung 28 bewegt. Der Trinkhalm hat hier auch noch eine längsaxiale Bewegungskomponente. Sowohl die queraxiale Bewegungskomponente als auch die längsaxiale Bewegungskomponente werden durch einen Kettenvorhang 18 gebremst. Dies ist gut in Fig. 3 zu erkennen. Von dem Kettenvorhang 18 abgebremst, fallen die Trinkhalme 12 nach unten in einen durch den Kettenvorhang 18 und das Blech 19 definierten Kanal. Von dort gelangen die Trinkhalme 12 auf ein Förderband 29, um auf dem Förderband 29, vorzugsweise monolagig, in queraxialer Förderrichtung 28 abgefördert zu werden. Der Kettenvorhang 18 hat einen ersten Teil, der schräg nach unten ausgerichtet ist, und einen zweiten Teil, der im Wesentlich parallel zu dem Förderband 29 angeordnet ist. Der zweite Teil dient zur Beruhigung der Bewegung der Trinkhalme 12. Durch Vorsehen eines Kettenvorhangs 18 wird die überschüssige Luft, die durch den oder die Druckluftstöße 13 erzeugt wird, abgeführt.

Die Düsen 14, 15 können in ihrem Abstand 30 zueinander auf der Einstellschiene 22 in Einstellrichtung 23 eingestellt werden. Hiermit kann auf eine sich verändernde Länge bzw. eine einstellbare Länge der Trinkhalme 12 reagiert werden. Wenn beispielsweise in einer neuen Schicht die Länge der Trinkhalme 12 sich verdoppelt, kann sich beispielsweise der Abstand 30 der Düsen 14, 15 um 50 % erhöhen. Diese Einstellung kann auch automatisch vorgenommen werden. In diesem Ausführungsbeispiel ist allerdings eine manuell bedienbare Feststellschraube 21 vorgesehen, die zum Einstellen des Abstands zunächst gelöst werden kann, um dann nach Einstellen des Abstands wieder festgedreht zu werden.

Die Einstellschiene 23 kann auch einstückig mit Führungsschiene 16 oder als Führungsschiene 16 ausgebildet sein. Zudem kann auch der Abstand der Düsen 14, 15 zu dem Trinkhalm 12 bzw. der Führungsschiene 16 über eine Abstandseinstellung 24 eingestellt werden. Hierdurch kann der Impulsübertrag des Druckluftstoßes auf die Trinkhalme 12 optimiert werden.

In Fig. 2 ist zur verbesserten Darstellbarkeit die Abdeckung 17 weggelassen. Dies gilt auch für Fig. 3.

Der auf dem Förderband 29 geförderte monolagige Strom von Trinkhalmen 12 kann in einen mehrlagigen Massenstrom übergeben werden. Alternativ können auch die Trinkhalme 12 in weitere Logistiksysteme abgegeben werden wie beispielsweise dynamische Speicher oder passive Speicher (beispielsweise Schragen). Die queraxial geförderten Trinkhalme 12 können auch unmittelbar durch queraxiale Förderung in Verpackungen eingeführt werden.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Überführungsvorrichtung
- 11: Strang
- 12: Trinkhalm
- 13: Druckluftstoß
- 14: Düse
- 15: Düse
- 16: Führungsschiene
- 17: Abdeckung
- 18: Kettenvorhang
- 19: Blech
- 20: Sensor
- 21: Feststellschraube
- 22: Einstellschiene
- 23: Einstellrichtung
- 24: Abstandseinstellung
- 25: Ablängvorrichtung
- 26: Schneide
- 27: längsaxiale Förderrichtung
- 28: queraxiale Förderrichtung
- 29: Förderband
- 30: Abstand

## Patentansprüche

1. Vorrichtung (10) zur Überführung von längsaxial (27) geförderten Trinkhalmen (12) in eine queraxiale Förderrichtung (28), wobei eine Förderstrecke (16) vorgesehen ist, in der die längsaxial geförderten Trinkhalme (12) längsaxial förderbar oder gefördert sind, wobei außerdem eine Druckluftstoßeinrichtung (14, 15) vorgesehen ist, die ausgebildet ist, einen Druckluftstoß (13) quer in die Förderstrecke (16) abzugeben, wobei die Druckluftstoßeinrichtung (14, 15) zwei räumlich getrennte Druckluftausgänge aufweist, wobei der Abstand (30) der Druckluftausgänge zueinander einstellbar ist.

2. Vorrichtung (10) nach Anspruch 1, **dadurch gekennzeichnet, dass** die zeitliche Länge des Druckluftstoßes (13) einstellbar ist.

3. Vorrichtung (10) nach Anspruch 1 oder 2, **dadurch gekennzeichnet, dass** der Druckluftstoß (13) zeitlich getaktet ist, wobei insbesondere der Takt über eine einen längsaxial geförderten Strang in Trinkhalme ablängende Ablängvorrichtung (25) vorgebbar ist.

4. Vorrichtung (10) nach einem der Ansprüche 1 bis 3, **dadurch gekennzeichnet, dass** in Richtung des Druckluftstoßes (13) eine Bewegungshemmvorrichtung (18) vorgesehen ist, die eine horizontale Querbewegung der Trinkhalme (12) begrenzt, wobei insbesondere die Bewegungshemmvorrichtung (18) wenigstens einen Kettenvorhang umfasst.

5. Vorrichtung (10) nach einem der Ansprüche 1 bis 4, **dadurch gekennzeichnet, dass** unterhalb der Druckluftstoßeinrichtung (14, 15) ein Förderelement (29), insbesondere ein Förderband, zum queraxialen Abfördern von Trinkhalmen (12) vorgesehen ist.

6. Vorrichtung zur Herstellung von Trinkhalmen (12) umfassend eine Vorrichtung (10) zur Überführung von längsaxial geförderten Trinkhalmen (12) in eine queraxiale Förderrichtung (28) nach einem der Ansprüche 1 bis 5.

7. Verfahren zum Überführen von längsaxial geförderten Trinkhalmen (12) in eine queraxiale Förderrichtung (28), wobei die Trinkhalme (12) zunächst in eine Richtung (27) einer Längsachse der Trinkhalme (12) gefördert werden, **dadurch gekennzeichnet, dass** die Trinkhalme (12) mittels eines Druckluftstoßes (13) eine Queraxialbewegungskomponente erhalten, wobei der Druckluftstoß (13) mittels einer Druckluftstoßeinrichtung (14,15) abgegeben wird, wobei die Druckluftstoßeinrichtung (14,15) zwei räumlich getrennte Druckluftausgänge aufweist, wobei der Abstand (30) der Druckluftausgänge zueinander einstellbar ist.

8. Verfahren nach Anspruch 7, **dadurch gekennzeichnet, dass** der Druckluftstoß (13) ein im Wesentlichen horizontaler Druckluftstoß (13) ist.

9. Verfahren nach Anspruch 7 oder 8, **dadurch gekennzeichnet, dass** die Trinkhalme (12) nach Beaufschlagen mit dem Druckluftstoß (13) von einer Bewegungshemmvorrichtung (18) in der horizontalen Bewegungsrichtung abgebremst werden.

10. Verfahren nach einem der Ansprüche 7 bis 9, **dadurch gekennzeichnet, dass** die Trinkhalme (12) nach Beaufschlagen mit dem Druckluftstoß (13) auf ein Förderelement (29) überführt werden, das die Trinkhalme (12) queraxial fördert, wobei insbesondere der Impuls der Trinkhalme (12) in längsaxialer Förderrichtung (27) beim längsaxialen Fördern kleiner ist als der durch den Druckluftstoß (13) erzeugte Impuls in queraxialer Förderrichtung (28).

11. Verfahren nach einem der Ansprüche 7 bis 10, **dadurch gekennzeichnet, dass** die zeitliche Länge des Druckluftstoßes (13) einstellbar ist.

12. Verfahren nach einem der Ansprüche 7 bis 11, **dadurch gekennzeichnet, dass** der Zeitpunkt des Druckluftstoßes (13) einstellbar ist, wobei insbesondere ein zeitlicher Takt den Zeitpunkt definiert, der in Abhängigkeit eines Taktes einer einen längsaxial geförderten Strang (11) in Trinkhalme (12) ablängenden Ablängvorrichtung (25) ist.

13. Verwendung eines Druckluftstoßes (13) zum Überführen eines Trinkhalms (12) bei der Herstellung des Trinkhalms (12) von einer längsaxialen Förderrichtung (27) in eine queraxiale Förderrichtung (28) , wobei der Druckluftstoß (13) mittels einer Druckluftstoßeinrichtung (14,15) abgegeben wird, wobei die Druckluftstoßeinrichtung (14,15) zwei räumlich getrennte Druckluftausgänge aufweist, wobei der Abstand (30) der Druckluftausgänge zueinander einstellbar ist.

14. Verwendung nach Anspruch 13, **dadurch gekennzeichnet, dass** eine Bewegungshemmvorrichtung (18) vorgesehen ist, die eine horizontale Bewegung des durch den Druckluftstoß (13) beaufschlagten Trinkhalms (12) hemmt und beendet, wobei insbesondere der Trinkhalm (12) auf ein Förderelement (29) fällt und auf dem Förderelement (29) in einem Massenstrom queraxial gefördert wird.

## Claims

1. A device (10) for transferring drinking straws (12) conveyed in a longitudinal axial direction (27) into a transverse axial conveying direction (28), wherein a conveying section (16) is provided, in which the drinking straws (12) conveyed in a longitudinal axial direction are or can be conveyed longitudinally-axially, wherein a compressed-air blasting device (14, 15) is additionally provided, which is configured to dispense a blast of compressed air (13) transversely into the conveying section (16), wherein the compressed-air blasting device (14, 15) has two spatially separated compressed-air outlets, wherein the distance (30) of the compressed-air outlets from one another can be adjusted.

2. The device (10) according to Claim 1, **characterized in that** the temporal length of the blast of compressed air (13) can be adjusted.

3. The device (10) according to Claim 1 or 2, **characterized in that** the blast of compressed air (13) is temporally pulsed, wherein the clock pulse can in particular be predefined via a cutting-to-length device (25) which cuts a strand conveyed in a longitudinal axial direction to length into drinking straws.

4. The device (10) according to any one of Claims 1 to 3, **characterized in that** a movement-inhibiting device (18) is provided in the direction of the blast of compressed air (13), which movement-inhibiting device delimits a horizontal transverse movement of the drinking straws (12), wherein the movement-inhibiting device (18) in particular comprises at least one chain curtain.

5. The device (10) according to any one of Claims 1 to 4, **characterized in that** a conveying element (29), in particular a conveyor belt, for conveying drinking straws (12) in a transverse axial direction is provided beneath the compressed-air blasting device (14, 15).

6. A device for producing drinking straws (12), comprising a device (10) for transferring drinking straws (12) conveyed in a longitudinal axial direction into a transverse axial conveying direction (28) according to any one of Claims 1 to 5.

7. A method for transferring drinking straws (12) conveyed in a longitudinal axial direction into a transverse axial conveying direction (28), wherein the drinking straws (12) are initially conveyed in a direction (27) of a longitudinal axis of the drinking straws (12), **characterized in that** the drinking straws (12) obtain a transverse axial movement component by means of a blast of compressed air (13), wherein the blast of compressed air (13) is dispensed by means of a compressed-air blasting device (14, 15), wherein the compressed-air blasting device (14, 15) has two spatially separated compressed-air outlets, wherein the distance (30) of the compressed-air outlets from one another can be adjusted.

8. The method according to Claim 7, **characterized in that** the blast of compressed air (13) is a substantially horizontal blast of compressed air (13).

9. The method according to Claim 7 or 8, **characterized in that** the drinking straws (12), after being acted upon by the blast of compressed air (13), are braked by a movement-inhibiting device (18) in the horizontal direction of movement.

10. The method according to any one of Claims 7 to 9, **characterized in that** the drinking straws (12), after being acted upon by the blast of compressed air (13), are transferred to a conveying element (29) which conveys the drinking straws (12) in a transverse axial direction, wherein the pulse of the drinking straws (12) in the longitudinal axial conveying direction (27) during longitudinal axial conveying is in particular smaller than the pulse generated by the blast of compressed air (13) in the transverse axial conveying direction (28).

11. The method according to any one of Claims 7 to 10, **characterized in that** the temporal length of the blast of compressed air (13) can be adjusted.

12. The method according to any one of Claims 7 to 11, **characterized in that** the time of the blast of compressed air (13) can be adjusted, wherein a temporal clock pulse in particular defines the time which is dependent on a clock pulse of a cutting-to-length device (25) which cuts a strand (11) conveyed in a longitudinal axial direction to length into drinking straws (12).

13. Use of a blast of compressed air (13) for transferring a drinking straw (12) during the production of the drinking straw (12) from a longitudinal axial conveying direction (27) into a transverse axial conveying direction (28), wherein the blast of compressed air (13) is dispensed by means of a compressed-air blasting device (14, 15), wherein the compressed-air blasting device (14, 15) has two spatially separated compressed-air outlets, wherein the distance (30) of the compressed-air outlets from one another can be adjusted.

14. The use according to Claim 13, **characterized in that** a movement-inhibiting device (18) is provided, which inhibits and terminates a horizontal movement of the drinking straw (12) acted upon by the blast of compressed air (13), wherein the drinking straw (12) falls in particular onto a conveying element (29) and is conveyed on the conveying element (29) in a mass flow in a transverse axial direction.

## Revendications

1. Dispositif (10) pour le transfert de pailles à boire (12) transportées selon l'axe longitudinal (27) dans une direction de transport (28) transversale à l'axe, une voie de transport (16) étant prévue dans laquelle les pailles à boire (12) transportées selon l'axe longitudinal sont aptes à être transportées ou sont transportées selon l'axe longitudinal, un dispositif (14, 15) à jets d'air comprimé est prévu, qui est conçu pour délivrer un jet d'air comprimé (13) transversalement dans la voie de transport (16), le dispositif (14, 15) à jets d'air comprimé présentant deux sorties d'air comprimé spatialement séparées, la distance (30) entre les sorties d'air comprimé étant réglable.

2. Dispositif (10) selon la revendication 1, **caractérisé en ce que** la longueur temporelle du jet d'air comprimé (13) est réglable.

3. Dispositif (10) selon la revendication 1 ou la revendication 2, **caractérisé en ce que** le jet d'air comprimé (13) est cadencé dans le temps, la cadence pouvant notamment être prédéfinie par un dispositif de coupe (25) coupant un boudin transporté dans le sens de l'axe longitudinal en pailles à boire.

4. Dispositif (10) selon l'une des revendications 1 à 3, **caractérisé en ce qu'**il est prévu, dans la direction du jet d'air comprimé (13), un dispositif de blocage de mouvement (18) qui limite un mouvement transversal horizontal des pailles à boire (12), le dispositif de blocage de mouvement (18) comprenant notamment au moins un rideau de chaînes.

5. Dispositif (10) selon l'une des revendications 1 à 4, **caractérisé en ce qu'**un élément de transport (29), en particulier une bande transporteuse, est prévu en dessous du dispositif (14, 15) à jets d'air comprimé pour le transport des pailles à boire (12) dans le sens transversal.

6. Dispositif de fabrication de pailles à boire (12), comprenant un dispositif (10) de transfert de pailles à boire (12) transportées selon l'axe longitudinal dans un sens de transport (28) transversal selon l'une des revendications 1 à 5.

7. Procédé pour transférer de pailles à boire (12) transportées selon l'axe longitudinal dans une direction de transport (28) transversale, les pailles à boire (12) étant d'abord transportées dans une direction (27) d'un axe longitudinal des pailles à boire (12), **caractérisé en ce que** les pailles à boire (12) reçoivent une composante de mouvement transversale au moyen d'un jet d'air comprimé (13), le jet d'air comprimé (13) étant délivré au moyen d'un dispositif (14, 15) à jets d'air comprimé, le dispositif (14, 15) à jets d'air comprimé présentant deux sorties d'air comprimé spatialement séparées, la distance (30) entre les sorties d'air comprimé étant réglable.

8. Procédé selon la revendication 7, **caractérisé en ce que** le jet d'air comprimé (13) est un jet d'air comprimé (13) essentiellement horizontal.

9. Procédé selon la revendication 7 ou la revendication 8, **caractérisé en ce que** les pailles à boire (12), après avoir été exposées au jet d'air comprimé (13), sont freinées par un dispositif d'arrêt de mouvement (18) dans la direction de mouvement horizontale.

10. Procédé selon l'une des revendications 7 à 9, **caractérisé en ce que** les pailles à boire (12), après avoir été exposées au jet d'air comprimé (13), sont transférées sur un élément de transport (29) qui transporte les pailles à boire (12) transversalement à l'axe, une impulsion des pailles à boire (12) dans le sens de transport longitudinal (27) lors du transport longitudinal étant notamment inférieure à l'impulsion générée par le jet d'air comprimé (13) dans le sens de transport transversal (28).

11. Procédé selon l'une des revendications 7 à 10, **caractérisé en ce que** la longueur temporelle du jet d'air comprimé (13) est réglable.

12. Procédé selon l'une des revendications 7 à 11, **caractérisé en ce que** l'instant du jet d'air comprimé (13) est réglable, une cadence temporelle définissant notamment l'instant qui est fonction d'une cadence d'un dispositif de coupe (25) coupant à longueur, en pailles à boire (12), un boudin (11) transporté selon l'axe longitudinal.

13. Utilisation d'un jet d'air comprimé (13) pour transférer une paille à boire (12) lors de la fabrication de la paille à boire (12) d'une direction de transport (27) à axe longitudinal à une direction de transport (28) à axe transversal, le jet d'air comprimé (13) étant délivré au moyen d'un dispositif (14, 15) à jets d'air comprimé, le dispositif (14, 15) à jets d'air comprimé présentant deux sorties d'air comprimé spatialement séparées, la distance (30) entre les sorties d'air comprimé étant réglable.

14. Utilisation selon la revendication 13, **caractérisée en ce qu'**il est prévu un dispositif d'inhibition de mouvement (18) qui inhibe et met fin à un mouvement horizontal de la paille à boire (12) exposée au jet d'air comprimé (13), la paille à boire (12) tombant notamment sur un élément de transport (29) et se déplaçant sur l'élément de transport (29) dans un flux massique.
